# EUROPEAN PATENT APPLICATION

(11) **EP 4 375 575 A1**
(43) Date of publication of application: **29.05.2024**
(21) Application number: 22210007.5
(22) Date of filing: 28.11.2022
(51) Int. Cl.: F24C 14/00, B08B 9/032

(54) **AN AIRCRAFT OVEN WITH INTEGRATED CLEANING SYSTEM**

(71) Applicant: B/E Aerospace, Inc., Winston-Salem, NC 27105 (US)
(72) Inventor: PANJER, Frederik Adrian Stephan, 3953BW Maarsbergen (NL)
(74) Representative: Dehns

(57) **Abstract**

An aircraft oven that includes a first portion (102) having an inner cavity (110) surrounded by an inner housing (111). The first portion (102) includes a ventilation area. The aircraft oven also includes a second portion including a water line (126) that extends through the second portion (104), and wherein the water line (126) extends along the inner housing, a first plurality of nozzles (112a-e) configured to extend from the water line (126) into the inner cavity (110), and a second plurality of nozzles (122a-c) configured to extend from the water line (126), through the inner housing (111) and into the ventilation area (114).

## Description

### TECHNICAL FIELD

The examples shown herein relate generally to a cleaning system for an aircraft oven. In particular, the examples show an integrated cleaning system for an aircraft oven.

### BACKGROUND

Aircraft ovens tend to have an inner cavity where meals are provided and heated. Normally, the inner cavity can be cleaned when the aircraft is grounded. However, it is not possible for cabin crew or ground staff to clean all areas of an oven. Therefore, there is a need for an improved cleaning system within an aircraft oven.

### SUMMARY

There is provided an aircraft oven that includes a first portion having an inner cavity surrounded by an inner housing. The first portion includes a ventilation area. The aircraft oven also includes a second portion including a water line that extends through the second portion. The water line extends along the inner housing. The aircraft oven also includes a first plurality of nozzles configured to extend from the water line into the inner cavity and a second plurality of nozzles configured to extend from the water line, through the inner housing and into the ventilation area.

The aircraft oven may further include a pump and a motor, wherein the pump is attached to the motor, and wherein the pump is configured to pump water through the water line. A solenoid valve may be provided downstream of the pump to control the flow of water through the water line.

The aircraft oven may further include a container configured to be fluidly attached to the water line. The container may include a cleaning/degreasing agent. The container may also include a solenoid valve configured to control the amount of cleaning/degreasing agent that is provided in the water line.

The water line may include a first branch, wherein the first plurality of nozzles may be configured to extend from the first branch, through the inner housing and into the inner cavity. The water line may also include a second branch, wherein the second plurality of nozzles may be configured to extend from the second branch, through the inner housing and into the ventilation area. The first plurality of nozzles may be configured to direct jets of water downward into the inner cavity. The second plurality of nozzles may be configured to direct jets of water upward towards the inner housing and into the ventilation area.

The aircraft oven may further include a controller, wherein the controller may be adapted to control the amount of water through the water line, the amount of cleaning/degreasing agent, the pressure of the jets of water from the first plurality of nozzles and/or the second plurality of nozzles. The controller may be configured to control the temperature of the ventilation area and the inner cavity. The temperature may be between an ambient temperature and 110 degrees Celsius.

There is also provided an aircraft that includes the aircraft oven described above.

In another aspect, there is also provided a method for cleaning the aircraft oven as described above, the method includes providing water through the water line, wherein the water is expelled through the first plurality of nozzles and the second plurality of nozzles.

### BRIEF DESCRIPTION OF THE DRAWINGS

Figure 1 shows a cross-section of an aircraft oven including an integrated cleaning system.
Figure 2a shows an example of a nozzle shown in Figure 1.
Figure 2b shows another example of a nozzle shown in Figure 1.

### DETAILED DESCRIPTION

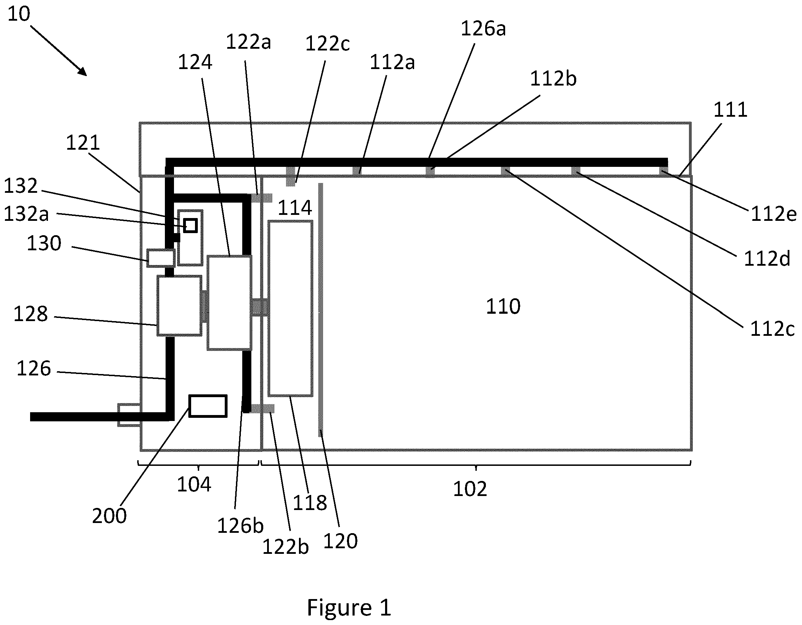

An aircraft oven with an integrated cleaning system is shown generally as reference 10 in Figure 1. The aircraft oven 10 includes a first portion 102 and a second portion 104. The first portion 102 includes an inner cavity 110 where meals can be provided and heated. The first portion 102 also includes an inner housing 111 that surrounds the inner cavity 110. There may also be provided a fan 118 and a baffle plate 120 in a ventilation area 114 that provide heat to the inner cavity 110. The inner cavity 110 and the ventilation area 114 could be separated by the baffle plate 120.

As shown in Figure 1, the second portion 104 is a portion of the aircraft oven 10 that houses the electronics. For example, there may be provided a motor 124 that drives the fan 118 in the first portion 102. There may also be provided a controller 200 that alters the speed of the motor 124 and the temperature provided in the inner cavity 110.

In a conventional aircraft oven, the baffle plate (e.g. baffle plate 120) would need to be removed in order to clean the area that houses a fan (e.g. fan 118). Food debris from preparing meals may also enter the area behind the baffle plate (e.g. where the fan is located), which is problematic as it may burn and smell during use of the oven. Removing the baffle plate each time to clean this area is cumbersome for ground staff and, therefore, there is a need to have an integrated cleaning system that can be automated by the cabin crew or ground staff in between, or during, flights.

As shown in Figure 1, there may be provided a water line 126 that enters the second portion 104 through an outer housing 121. The water line 121 may extend through the second portion and surround the inner housing 111 of the first portion 102. The water line 126 is configured to provide water to assist in cleaning the aircraft oven 10. As shown in Figure 1, there is a pump 128 that may be attached to the motor 124 to pump the water moving through the water line 126. A solenoid valve 130 may be provided downstream of the pump 128 to control the flow of water through the water line 126. A container 132 may be fluidly attached to the water line 126. The container 132 may include a cleaning/degreasing agent that can enter the water line 126 to assist in cleaning the aircraft oven 10. In some examples, the container 132 may include a solenoid valve 132a to control the amount of cleaning/degreasing agent that is provided into the water line 126.

The container 132 may additionally contain water softener to prevent scaling from cleaning and/or cooking.

A first branch 126a of the water line 126 is shown in Figure 1 as extending along a first surface of the inner housing 111. As shown, a first plurality of nozzles 112a, 112b, 112c, 112d and 112e may extend from the first branch 126a of the water line 126 into the inner cavity 110. As shown in Figure 1, the first plurality of nozzles 112a, 112b, 112c, 112d and 112e are flush with the inner housing 111 to provide water into the inner cavity 110. In this way, the first plurality of nozzles 112a, 112c, 112c, 112d and 112e do not protrude into the inner cavity 110 to prevent obstructions in the inner cavity 110. Of course, it is possible that the first plurality of nozzles 112a, 112b, 112c, 112d and 112e could extend through the inner housing 111 (e.g. to not be flush with the inner housing 111) into the inner cavity 110. The first plurality of nozzles 112a, 112b, 112c, 112d and 112e are configured to provide water into the inner cavity 110. The first plurality of nozzles 112a-112e may, for example, provide jets of water into the inner cavity 110 to assist in cleaning and removing food debris. Although five nozzles are shown, it is envisaged that any number of nozzles may be provided to clean the area efficiently and accurately.

As shown in Figure 1, the water line 126 may also include a second branch 126b which extends along a second surface of the inner housing 111. A second plurality of nozzles 122a and 122b may extend from the second branch 126b of the water line 126, through the inner housing 111 and into the ventilation area 114. In addition, a nozzle 122c, similar to nozzles 122a and 122b, may be provided from the first branch 126a of the water line 126, through the inner housing 111, into the ventilation area 114. In this way, the second plurality of nozzles 122a, 122b and 122c provide water into the ventilation area 114. For example, jets of water could be provided from the second plurality of nozzles 122a, 122b and 122c to assist in cleaning and removal of food debris from the ventilation area 114. Therefore, the baffle plate 120 would not need to be removed in order to clean this area of the oven. Although three nozzles are shown, it is envisaged that any number of nozzles may be provided to clean the area efficiently and accurately.

The controller 200 may control the amount of water, amount of cleaning agent, pressure of the jets from the first plurality of nozzles 112a-e and/or the second plurality of nozzles 122a-c, the cycle time of the cleaning programs, and the like. The controller 200 may also control the ventilation area 114 and inner cavity 110 to maintain a temperature of between 15 and 110 degrees Celsius for improved cleaning efficiency. Although 15 degrees Celsius is considered in the lower range, it is envisaged that this would be the ambient temperature of the air surrounding the oven (e.g. where ambient temperature is between 15 and 35 degrees Celsius). Although not shown, the cabin crew or ground staff may operate functions on the oven to set cleaning cycles (e.g. machine care). It is envisaged that the cleaning cycles would be automated from the controller 200 over a specific period of time in order to ensure that the aircraft oven 10 is cleaned on a regular basis.

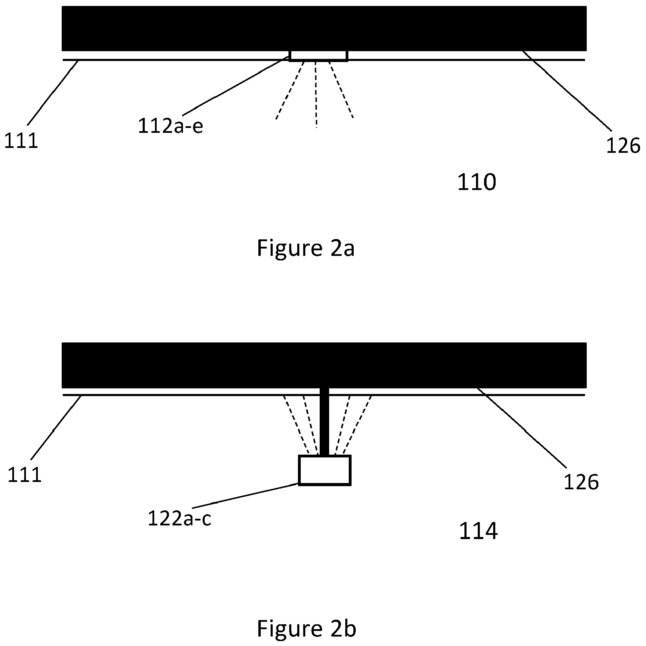

Figure 2a shows an example of a nozzle of the first plurality of nozzles 112a-e. As shown in Figure 2a, the nozzle 112a-e extends from the water line 126 into the inner cavity 110. As can be seen in Figure 2a, the jets of water are directed downward into the inner cavity 110 from the nozzle 112a-e.

Figure 2b shows an example of a nozzle of the second plurality of nozzles 122a-c. As shown in Figure 2b, the nozzle 122a-c extends from the water line 126, through the inner housing 111 and into the ventilation area 114. As can be seen in Figure 2b, the jets of water are directed upward towards the inner housing 111 and into the ventilation area 114 from the nozzle 122a-c. This arrangement is known as an 'inverted' nozzle. The 'inverted' nozzle ensures that all surfaces in the ventilation area 114 are cleaned. This is important as the ventilation area 114 cannot be reached from cabin crew or ground staff during ordinary cleaning.

Although Figure 2a is directed to the first plurality of nozzles 112a-e and Figure 2b is directed to the second plurality of nozzles 122a-c, it is to be understood that any of the nozzles provided in the overall cleaning system could be an 'ordinary' nozzle (e.g. the nozzle of Figure 2a) or an 'inverted' nozzle (e.g. the nozzle of Figure 2b).

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An aircraft oven, comprising:
a first portion (102) having an inner cavity (110) surrounded by an inner housing (111);
wherein the first portion (102) includes a ventilation area;
a second portion including a water line (126) that extends through the second portion (104), and wherein the water line (126) extends along the inner housing;
a first plurality of nozzles (112a-e) configured to extend from the water line (126) into the inner cavity (110);
a second plurality of nozzles (122a-c) configured to extend from the water line (126), through the inner housing (111) and into the ventilation area (114).

2. The aircraft oven of claim 1, further comprising a pump (128) and a motor (124), wherein the pump (128) is attached to the motor, and wherein the pump (128) is configured to pump water through the water line (126).

3. The aircraft oven of claim 2, wherein a solenoid valve (130) is provided downstream of the pump (128) to control the flow of water through the water line (126).

4. The aircraft oven of any preceding claim, further comprising a container (132) configured to be fluidly attached to the water line (126).

5. The aircraft oven of claim 4, wherein the container (132) includes a cleaning/degreasing agent.

6. The aircraft oven of claim 5, wherein the container (132) includes a solenoid valve (132a) configured to control the amount of cleaning/degreasing agent that is provided in the water line (126).

7. The aircraft oven of any preceding claim, wherein the water line (126) includes a first branch (126a), wherein the first plurality of nozzles (112a-112e) is configured to extend from the first branch (126a) into the inner cavity; and
wherein the water line (126) includes a second branch (126b), wherein the second plurality of nozzles (122a-122c) is configured to extend from the second branch (126b), through the inner housing (111) and into the ventilation area.

8. The aircraft oven of claim 7, wherein the plurality of first nozzles (112a-112e) is configured to direct jets of water downward into the inner cavity (110).

9. The aircraft oven of claim 8, wherein the second plurality of nozzles (122a-122c) is configured to direct jets of water upward towards the inner housing (111) and into the ventilation area (114).

10. The aircraft oven of claim 9, further comprising a controller (200), wherein the controller (200) is adapted to control the amount of water through the water line (126), the amount of cleaning/degreasing agent, the pressure of the jets of water from the first plurality of nozzles (112a-112e) and/or the second plurality of nozzles (122a-122c).

11. The aircraft oven of claim 10, wherein the controller (200) is configured to control the temperature of the ventilation area (114) and the inner cavity (110).

12. The aircraft oven of claim 11, wherein the temperature is between an ambient temperature and 110 degrees Celsius.

13. An aircraft, comprising:
the aircraft oven of any preceding claim.

14. A method for cleaning the aircraft oven as claimed in any of claims 1-12, the method comprising:
providing water through the water line (126), wherein the water is expelled through the first plurality of nozzles (112a-e) and the second plurality of nozzles (122a-c).
